# EUROPEAN PATENT APPLICATION

(11) **EP 3 145 261 A1**
(43) Date of publication of application: **22.03.2017**
(21) Application number: 15185928.7
(22) Date of filing: 18.09.2015
(51) Int. Cl.: H04W 72/04, H04W 72/12, H04W 88/08, H04L 27/26

(54) **CELLULAR COMMUNICATIONS NETWORK**

(71) Applicant: BRITISH TELECOMMUNICATIONS public limited company, London EC1A 7AJ (GB)
(72) Inventor: The designation of the inventor has not yet been filed
(74) Representative: Tuckett, William John

(57) **Abstract**

This invention provides a centralised cellular communications network in which the scheduling function is implemented by a central unit and the modulating function is implemented by one of a plurality of remote units. A processor of the central unit is adapted to schedule data into a transport unit and create a Downlink Control Information (DCI) message indicating the modulation scheme to be used, which are both transmitted to the remote unit. The remote unit may then modulate the data in the transport unit according to the modulation scheme in the DCI message.

## Description

### Field of the Invention

The present invention relates to a cellular communications network.

### Background

Conventional cellular communications networks consist of a few base stations transmitting signals to User Equipment over a large coverage area (typically over several kilometres squared). These base stations are often known as macro base stations. However, in recent years the trend has been towards a mass distribution of base stations having a relatively small coverage area (typically known as Home evolved NodeBs (Home eNB, or HeNB) or small cells, and include femtocells, picocells and metrocells depending on their coverage area). These HeNBs typically reside in customers' premises and connect to the cellular core network via a Digital Subscriber Line or Fibre-to-the-Premises connection but may also reside on street furniture (such as on lamp posts) and enterprise buildings (such as corporate offices, stadiums or shopping malls), and can connect to the Core Network using one of several different forms of backhaul links. It is understood that this mass distribution of base stations improves coverage, especially when positioned inside a modern building having construction materials that substantially attenuate signals from the macro base stations.

These distributed networks are self-organised in order to reduce the amount of control traffic on the network and reduce the frequency of human intervention required to maintain the network. Accordingly, each HeNB will typically select its own setup configuration and will schedule transmissions to its connected UEs. The main problem to be addressed by the self-organised HeNBs is to configure in such a way as to minimise interference in the cellular network, such that transmissions do not interfere with transmissions between other HeNBs and their UEs, which would significantly reduce the data throughput and QoS of the network. Accordingly, a majority of research in the area of HeNBs is directed towards optimising their self-organising nature.

Another avenue of research is into the centralisation of certain base station functions, including the baseband processing and higher-layer functions (such as encryption, user and network control data formatting and scheduling). In effect, a base station is split into two entities, typically known as a digital BaseBand Unit (BBU) and a Remote Radio Head (RRH). In this arrangement, the BBU performs certain signal processing operations and some higher-layer functions of a base station, and sends a partially (or fully) processed signal to the RRH to be transmitted to the UE. The benefits of this arrangement fall into three groups - site simplification, improved hardware utilisation, and cellular radio network performance benefits (for example from Coordinated MultiPoint (CoMP) or optimised Self Organising Network (SON) functions).

The centralised network has properties of both the conventional macro base station network, in that signals to a large number of UEs are processed by a single entity, but also the distributed network, in that these signals are ultimately transmitted by a mass distribution network of radios. Accordingly, the capital and operational expenditure of the BBUs, and the relatively small capital expenditure of the RRHs (as they do not require the same processing capabilities of the HeNB), lead to site simplification and reduced cost for the Mobile Network Operator (MNO).

Furthermore, in distributed cellular networks, each HeNB includes sufficient processing hardware to provide maximum service to UEs at all times. However, most UEs will only require a fraction of this service for the majority of the time, and the processing capabilities of the HeNB are often wasted. Centralised processing therefore allows MNOs to more closely match the overall processing capabilities of the BBU with the capacity demands of all UEs connected to all RRHs for that BBU. Thus, as with most cloud-based solutions, there are clear benefits in terms of flexibility and scalability from the centralised arrangement. This benefit is often referred to as the provision of radio network for average, rather than peak, capacity.

There are a variety of technologies that can benefit from centralised processing. For example, CoMP benefits are realised when several RRHs act cooperatively to communicate with a single UE. This can significantly improve service for a UE at the edges of coverage areas for several RRHs, and is clearly difficult to achieve in distributed networks in which the HeNBs act autonomously. In a further example, a centralised environment can minimise cell identifier and frequency conflicts between adjacent base stations, and UEs can be scheduled in an efficient way minimising interference in the network.

Centralised processing is therefore an important technology for cellular communications. However, the MNOs must decide on the point at which the signal processing should be split between the BBU and RRH, and there are pros and cons associated with each possible split point. Several of these arrangements involve the scheduling function (a part of the Media Access Control (MAC) layer, or Layer 2) being centrally processed at the BBU, and the modulating function (a part of the Physical (PHY) layer, or Layer 1) being remotely processed by the RRH. Thus, taking downlink transmissions as an example, the BBU receives a stream of IP data packets for a UE and processes them into MAC Protocol Data Units (PDUs). The BBU then performs a scheduling function in order to process these MAC PDUs into Transport Blocks (TBs). The exact processing involved in the scheduling function can vary between implementations, but generally comprises determining suitable transmission parameters for the MAC PDUs (using measurement reports from a UE indicating the quality of the radio channel between the RRH and UE) including the maximal modulation scheme that can be used for the transmission, and converting the MAC PDU into the corresponding stream of bits (thus forming the TB). The TB, and the chosen modulation scheme, are then sent to the modulating function (typically a Quadrature Amplitude Modulator, QAM) in the RRH in order to convert the stream of bits from the TB into a sequence of symbols according to the chosen modulation scheme. Thus, in a centralised architecture in which the BBU implements the scheduling function and the RRH implements the modulating function, the TB, and the modulation scheme for that TB, must be communicated to the RRH.

One drawback of centralised baseband processing is that certain implementations may require the communications link between the BBU and RRH to conform to strict bandwidth and latency requirements. For example, the Common Public Radio Interface (CPRI) specifies a maximum 16.276 nanosecond round-trip delay per logical connection, and line bit rates between 614.4 Mbit/s and 10137.6 Mbit/s. These requirements are placed on this communications link as the CPRI BBU and RRH exchange encoded quantised in-phase and quadrature components of baseband modulation symbols, which have to arrive with minimal delay in order for correct operation of analogue radio frequency functions at the RRH. Other split points involve different trade-offs between latency and bandwidth requirements for this "fronthaul" communications link between the BBU and RRH and the potential gains from the centralised arrangement, but, in general, low latency and high capacity links are required. This fronthaul connection between the BBU and RRH is therefore typically carried over a fibre or Fibre-to-the-X DSL connection. Furthermore, in order to comply with the above requirements, the control plane overhead between the BBU and RRH must be minimised. Accordingly, in the centralised network described above in which the split point is between the scheduling and modulation functions, the chosen modulation scheme is communicated using proprietary algorithms which minimise the processing overhead.

The present inventor has realised that this arrangement may be improved.

### Summary of the Invention

According to a first aspect of the invention, there is provided a scheduling module for a cellular communications network, comprising a processor configured to schedule data into a transport unit for a User Equipment, UE; and a transmitter configured to transmit, to one of a plurality of remote units, the transport unit and a Downlink Control Information, DCI, message, the DCI message indicating the modulation scheme for the data in the transport unit.

According to a second aspect of the invention, there is provided a modulating module for a cellular communications network, comprising a receiver configured to receive a transport unit, including scheduled data for a User Equipment, UE, and a Downlink Control Information, DCI, message, the DCI message indicating the modulation scheme to be used for the data in the transport unit; and a processor configured to modulate the scheduled data for transmission to the UE according to the modulation scheme indicated in the DCI message.

The present invention therefore provides a way of signalling the modulation scheme to be used for a transport unit (e.g. a Transport Block of the LTE protocol) to a remote unit implementing the modulating function by the use of the DCI message. The use of the DCI message goes against the technical prejudice in the art to using bespoke messages having minimal overhead. However, the use of a standardised message allows centralised scheduling entities and remote modulating entities to be used by various operators without any interoperability issues. This therefore offers increased flexibility in network infrastructure as central and remote units from different vendors may be used.

The processor of the scheduling module may be further configured to operate a plurality of virtualised environments, wherein in each virtualised environment the processor is configured to schedule data for a particular Network Operator. This has the benefit that the processing hardware of the scheduling module may be shared by a plurality of Network Operators, further enhancing the interoperability between the central and remote units of the network.

The modulating module may further comprise a transmitter configured to send the DCI message to the UE. In this manner, the remote unit does not need to construct the DCI message, such that the DCI message received from the central unit may be simply forwarded on to the UE.

There is also provided a network node including either the scheduling module or modulating module. There is also provided a cellular communications network including the network node.

According to a third aspect of the invention, there is provided a method of scheduling data in a cellular communications network, the method comprising the steps of: scheduling data into a transport unit for a User Equipment, UE; constructing a Downlink Control Information, DCI, message, the DCI message indicating the modulation scheme for the data in the transport unit; transmitting the transport unit and the DCI message to one of a plurality of remote units.

The method may also be operating in one of a plurality of virtualised environments.

According to a fourth aspect of the invention, there is provided a method of modulating data in a cellular communications network, the method comprising the steps of: receiving a transport unit including scheduled data for a User Equipment, UE, and a Downlink Control Information, DCI, message, the DCI message indicating the modulation scheme to be used for the data in the transport unit; modulating the scheduled data for transmission to the UE according to the modulation scheme indicated in the DCI message.

The method may further comprise the step of transmitting the DCI message to the UE.

There is also provided a computer program containing computer-executable code which, when executed on a computer, causes the computer to perform the steps of the method of any one of the third or fourth aspect of the invention.

### Brief Description of the Figures

In order that the present invention may be better understood, embodiments thereof will now be described, by way of example only, with reference to the accompanying drawings in which:
Figure 1 is a schematic diagram of an embodiment of a cellular communications network of the present invention;
Figure 2 is a schematic diagram of a digital BaseBand Unit (BBU) of the network of Figure 1;
Figure 3 is a schematic diagram illustrating the processing of data packets by a processor of the BBU of Figure 2;
Figure 4 is a schematic diagram illustrating the flow of data packets into and out of the BBU of Figure 2; and
Figure 5 is a schematic diagram of a Remote Radio Head of the network of Figure 1.

### Detailed Description of Embodiments

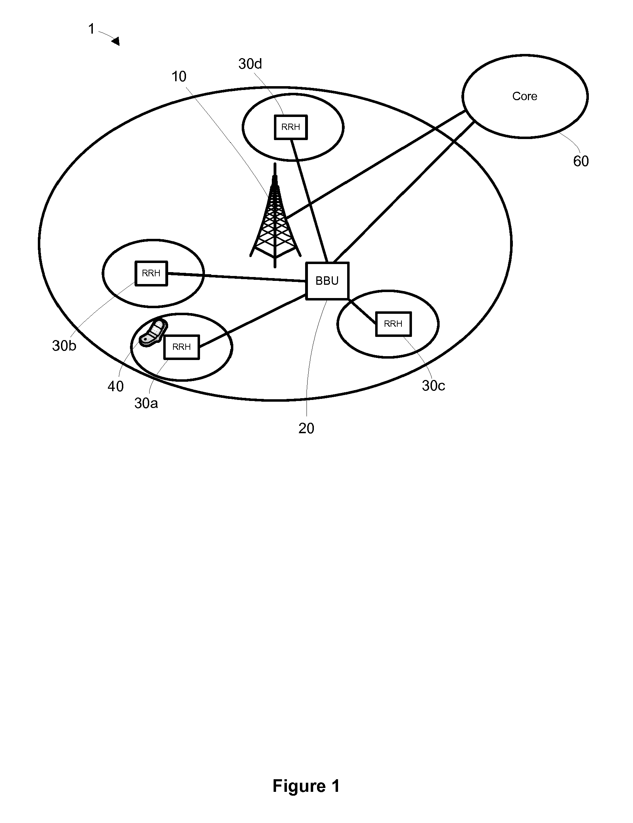

A first embodiment of a cellular communications network 1 of an embodiment of the present invention will now be described with reference to Figures 1 to 5. The cellular communications network 1 includes a macro basestation 10, a digital BaseBand Unit (BBU) 20, a plurality of Remote Radio Heads (RRHs) 30a...30d, and a User Equipment (UE) 40. The respective coverage areas of the macro basestation 10 and each of the plurality of RRHs 30a...30d are shown in Figure 1, illustrating that the macro basestation 10 coverage area is much larger than those of the plurality of RRHs 30a...30d. In this embodiment, the UE 40 is positioned within the coverage area of a first RRH 30a of the plurality of RRHs 30a...30d and is connected thereto.

Figure 1 also shows the Core Network (CN) 60. The CN 60 includes various modules of the Mobile Network Operator (MNO), such as the Mobility Management Entity, Authentication, Authorisation and Accounting server, etc., and onward connections to external networks such as the Internet. The connections from the CN 60 to the macro base station 10 and to the BBU 20, and between the BBU 20 and the plurality of RRHs 30a...30d are typically enterprise or consumer-grade wired connections, such as optical fibre or G.fast, but may also be microwave links. The macro basestation 10 and plurality of RRHs 30a...30d are in turn connected to any connected UEs via a wireless connection using any cellular communications protocol, which in this embodiment is the Long Term Evolution (LTE) 4^{th} Generation (4G) protocol.

Accordingly, any downlink data packet arriving at the BBU 20 from the CN 60 and destined for the UE 40 may be processed at the BBU 20 and sent to the first RRH 30a. The RRH 30a also processes the downlink data packet and transmits it to the UE 40. Any uplink data packet sent from UE 40 to any node outside the communications network 1 is transmitted from the UE 40 to the first RRH 30a, at which point it is processed and sent to the BBU 20. The BBU 20 processes the uplink data packet and transmits it over the CN 60 to its destination.

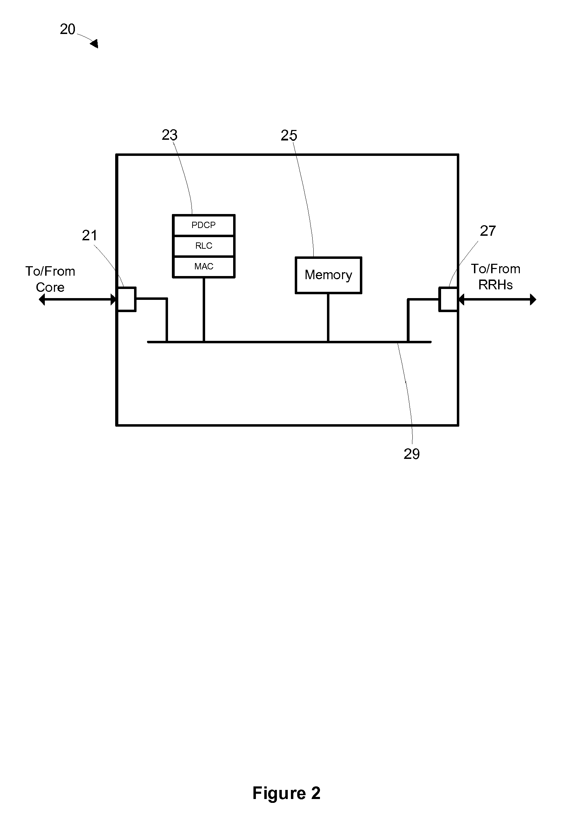

The BBU 20 is shown in more detail in Figure 2. The BBU 20 includes a first transceiver 21, a processor 23, memory 25 and a second transceiver 27 (the first and second transceivers may be implemented in the same or separate devices, in which case the designation of "first" and "second" is logical rather than physical). These components are communicatively linked by a bus 29. As noted above, the BBU 20 is configured to receive a downlink data packet from the CN 60 for any one of the UEs connected to any one of the plurality of RRHs. This is received via the first transceiver 21, and, in this example, is for UE 40. This downlink data packet is sent to the processor 23 via the bus 29. As shown in Figure 2, the processor 23 is divided (at least logically) into several processing modules, including a Packet Data Convergence Protocol (PDCP) module, a Radio Link Control (RLC) module, and a Media Access Control (MAC) module. These correlate to Layer 4 (Transport), Layer 3 (Network) and Layer 2 (Data Link) functions of the Open Systems Interconnection (OSI) model of telecommunications systems.

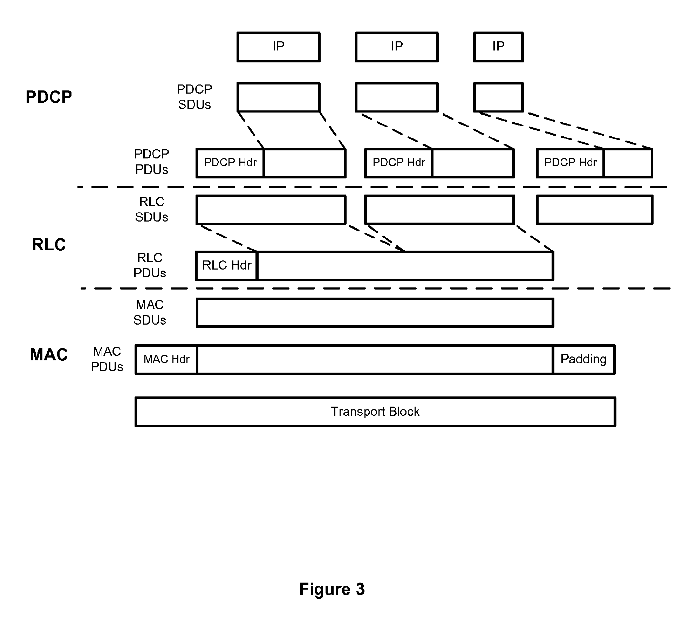

Figure 3 illustrates the processing performed by the processor 23 of the BBU 20 on the received downlink data packets. As the BBU 20 receives a stream of IP data packets from the CN 60, the PDCP module of the processor 23 encapsulates them into a PDCP Service Data Unit (SDU), which then receives a PDCP header to form a PDCP Protocol Data Unit (PDU). These PDCP PDUs are then processed by the RLC module of the processor 23 into RLC SDUs, which are then encapsulated (partially or fully) into one or more RLC PDUs. These RLC PDUs are then processed into MAC SDUs and, with the addition of a MAC header and additional padding, a MAC PDU.

The MAC PDU is then processed into a Transport Block (TB) by a MAC module of the processor 23 in the following manner. The processor 23 consults memory 25 for stored Channel Quality Indicators (CQIs), and any other stored metrics, on the connection between the first RRH 30a and the UE 40 (derived from measurement reports from the UE 40, described in more detail below). These CQIs and other metrics are used, in conjunction with the number of bits in the MAC PDU, to determine, firstly, the size of the TB that should be used by the processor 23 to encapsulate the MAC PDU and, secondly, the Modulation and Coding Scheme (MCS) which should be used by the Quadrature Amplitude Modulation (QAM) module (which, in this embodiment, is implemented by the first RRH 30a) to modulate the data bits before transmission. The exact method is dependent on the particular Mobile Network Operator (MNO), but is typically influenced by the quality of the radio interface, any imposed transmission power limits, and statistics relating to previous transmissions to the UE.

The MAC module of the processor 23 of the BBU therefore constructs a first TB, the size of which is dictated by the CQIs and other metrics stored in memory 25, which contains a stream of bits corresponding to the data bits contained in the MAC PDU.

The above processing is performed for each MAC PDU. Accordingly, a TB is produced for each MAC PDU, wherein the size and the MCS for each TB is individually determined.

The MAC module of the processor 23 also determines how many Resource Blocks (RBs), and which RBs, should be used for the transmission between the first RRH 30a and the UE 40. This will typically be implemented by a vendor-specific algorithm, but typically operates to ensure that all data packets that have arrived at the BBU (destined for the various UEs connected to the first RRH 30a) are allocated a fair proportion of the first RRH's resources. This allocation decision is taken in every Transmission Time Interval (TTI), which is every one millisecond in the LTE protocol, and is communicated to the first RRH 30a and UE 40 in the manner described below.

It will now be apparent to the skilled person that a large part of the signal processing of the data for the UE 40 has been performed centrally by the BBU 20, with the remainder of the processing, including the QAM function, being performed remotely by the first RRH 30a. In order for the first RRH 30a to correctly modulate the data bits of the TB to the correct resource and in the correct manner, the BBU 20 transmits the TB, its related information (including size and MCS) and the resource allocation, to the first RRH 30a over a wired connection. This is achieved, in this embodiment, by the BBU 20 constructing a Downlink Control Information (DCI) message.

Before discussing the construction of the DCI message, it is noted that, for the purposes of simplicity, a situation in which a single TB is transmitted in a single subframe of the LTE transmission frame will be described. In this arrangement, a single DCI message is constructed for a single subframe containing that TB. In more complicated arrangements, several TBs may be allocated per subframe, and a single DCI message may be used for one or more of those TBs. This will be clear to the skilled person upon review of the following description.

In this embodiment, the MAC module of the processor 23 is configured to construct a Downlink Control Information (DCI) message for each downlink LTE subframe. The DCI message is defined in the 3GPP TS 36.212 V12.5.0 standard of July 2015, which may be retrieved from http://www.3gpp.org/ftp/specs/archive/36_series/36.212/36212-c50.zip, as a message that "transports downlink, uplink or sidelink scheduling information, requests for aperiodic CQI reports, notifications of MCCH change or uplink power control commands for one cell and one RNTI". Several formats for the DCI message are also disclosed in the above standard, in section 5.3.3.1.

In this embodiment, the DCI message indicates the resource block allocations, MCS and TB size, and Formats 1, 1 A to 1 D, 2, and 2A to 2C can be used. These DCI messages contain the following information:
- Resource Allocation Header: This determines the way in which the subsequent RB allocation should be interpreted;
- Resource Block Allocation: This defines the set of RBs allocated to the UE;
- MCS: This defines a number between 0 and 31 to be used as a pointer to a row in the standard-defined MCS table. Each row in this table indicates the modulation scheme to be used for the TB and the TB size. The MCS table can be found in the 3GPP TS 36.213 V12.6.0 standard of June 2015, which may be retrieved from http://www.3gpp.org/ftp/Specs/archive/36_series/36.213/36213-c60.zip, in Table 7.1.7.1-1.

Accordingly, the MAC module of the processor 23 constructs a DCI message, including at least the above information, for each TB of each subframe. The TB and its related DCI message are then buffered in memory 25 until they are transmitted to the first RRH 30a. Thus, as a stream of data packets arrive at the BBU 20 via the first transceiver 21, the BBU 20 is configured to create a stream of TBs (including the data contained within the stream of data packets) and to create a DCI message for each subframe that will be carrying each TB. Returning to Figure 2, these are stored in memory 25 (which acts as a data packet buffer in this instance) until they are ready to be transmitted to the first RRH 30a.

When the BBU 20 is ready to transmit the stream of TBs to the first RRH 30a (this may occur as soon as the first TB and its related DCI message are prepared, or at a later time depending on some scheduling function), the BBU 20 sends the DCI message relating to the first TB to the first RRH 30a via the second transceiver 27 (which may be transmitted with other control information for the subframe containing the first TB). The DCI relating to the first TB is sent in advance of the TB in order for the first RRH 30a to process it according to the information contained in the DCI message (i.e. such that the QAM modulator modulates the bits contained in the TB according to the correct modulation scheme). The BBU 20 then sends the first TB in the first subframe, followed by a DCI message relating to the second TB. The first RRH 30a can therefore successfully process the TB (based on the information contained in the prior, first, DCI message), before configuring itself to receive and successfully process the second TB (based on the information in the second DCI message).

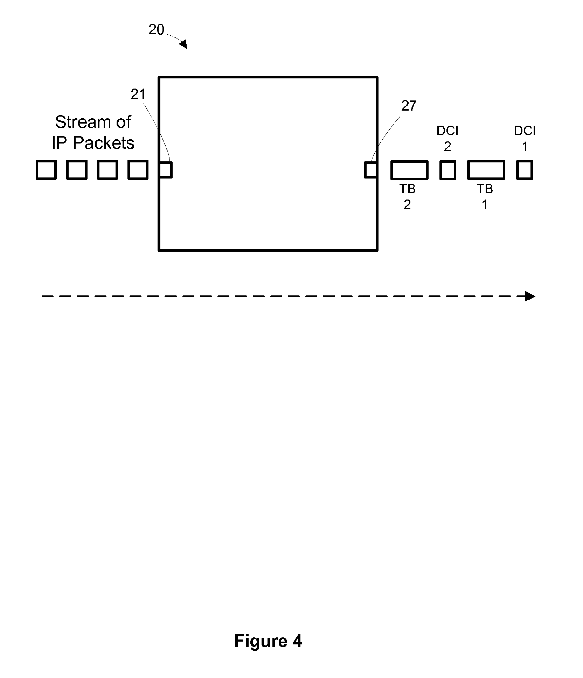

The flow of data packets in the downstream is shown in overview in Figure 4, which illustrates the BBU 20 receiving a stream of IP data packets at the first transceiver 21 (typically from the CN 60). These data packets are processed by the BBU 20 such that the data within the IP data packets is encapsulated within TBs. The BBU 20 transmits the TBs towards the first RRH 30a, one TTI after the DCI message related to that TB has been transmitted to the first RRH 30a.

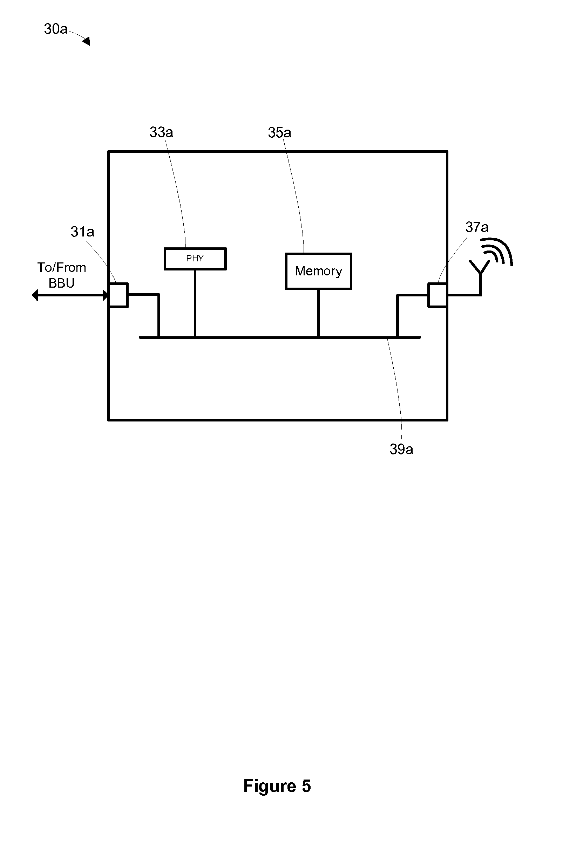

The first RRH 30a will now be described in more detail, with reference to Figure 5. The first RRH 30a includes a first transceiver 31 a, a processor 33a, memory 35a, and a second transceiver 37a, which are all connected via a bus 39a. Again, the first and second transceivers may be implemented in the same or separate devices (in which case the designation of "first" and "second" is logical rather than physical), although typically the first transceiver 31a would be a wired connection to the BBU 20, such as a Fibre-to-the-X DSL connection, whilst the second transceiver 37a would be an antenna configured for wireless communications, such as via the LTE 4G protocol, to any connected UE 40. As discussed above, the first transceiver 31a is configured to receive a stream of TBs and related DCI messages from the BBU 20.

The processor 33a of the first RRH 30a receives these TBs and related DCIs. As the data is now heavily pre-processed (compared to the IP data packets that the BBU 20 received), the processor 33a of the first RRH 30a only needs to implement PHY layer processing on the TBs before they are ready for transmission to the UE 40. The processor 33a of the first RRH 30a therefore does not require the same processing capacity as that of the BBU 20 (or, for example, a typical femtocell of a distributed cellular network of the prior art).

The processor 33a of the first RRH 30a initially receives the DCI message related to the first TB (and other control information). The DCI message indicates the resource blocks allocated for the UE 40 in the next TTI, the size of the TB, and the MCS to use. Based on this information, the processor 33a is able to discern which data bits received at the first transceiver 31 a are the first TB (as they follow the first DCI message in a predetermined way and are a function of the length defined in the first DCI message), how these data bits should be processed at PHY layer (including how the data bits should be modulated based on the MCS indicated in the first DCI message), and on what RBs they should be transmitted to the UE 40 in the next TTI.

As an example, the first RRH 30a receives the first DCI message, indicating that the first TB uses MCS index twenty and is allocated two RBs for the transmission. MCS index twenty correlates to modulation order six and TB size index eighteen. Modulation order six allows the QAM modulator (part of the PHY module of processor 33a) to modulate the data within the TB using a 64QAM modulation rate (such that six bits of data from the TB are modulated to one symbol). The combination of the TB size index and the number of allocated RBs allows processor 33a to determine the number of bits in the TB.

Accordingly, the first RRH 30a configures itself to receive and successfully process the first TB based on the information contained in the first DCI message. The first RRH 30a then receives the first TB and the second DCI message (relating to the second TB) via the first transceiver 31 a. The first transceiver 31 a thus processes the first TB as indicated above, and then reconfigures itself to receive the second TB (based on the information contained in the second DCI message). These processing steps continue until the first RRH 30a has received and processed each TB from the BBU 20.

Once each TB has been processed as detailed above, it is transmitted by the second transceiver 37a to the UE 40 using the specific RBs allocated to it (and may be buffered in memory 35a, if dictated by any scheduling function). Prior to this transmission, the first RRH 30a also transmits a DCI message to the UE 40, which allows the UE 40 to successfully receive and decode the TB. In this embodiment, the first RRH 30a is able to relay the DCI message received from the BBU 20 at the first transceiver 31 a to the UE 40, thus saving the first RRH 30a from having to construct a DCI message.

As noted above, the plurality of RRHs 30a...30d send measurement reports for their connected UEs to the BBU 20. This information is used by the BBU 20 when creating the DCI message, in particular when determining what MCS to use and how many RBs to allocate to each transmission to a UE. Using RRH 30a and UE 40 as an example, the RRH 30a thus receives a measurement report from the UE 40 indicating various parameters on the channel quality. These measurement reports are known as Uplink Control Information (UCI) in the LTE protocol, and include data on Channel State Information (CSI), Scheduling Requests (SRs) and Hybrid Automatic Repeat Request (HARQ) acknowledgments from the UE 40. The CSI reports consist of Channel Quality Indicators (CQIs), Precoding Matrix Indicators (PMIs), Precoding Type Indicators (PTIs) and Rank Indicators (RIs). These may be reported periodically to the RRH 30a, with a periodicity between 2 and 160ms which may be configured by the BBU 20 and/or Core 60. This is performed for each UE connected to the RRH 30a, and each measurement report is stored in memory 35a. The RRH 30a then constructs a message identifying each connected UE and its corresponding measurement report, and sends this to the BBU 20. As noted above, this is stored in memory 25 in the BBU 20, ready to be used in the construction of a DCI message.

The above embodiments do not detail the point at which Forward Error Correction (FEC) is implemented. Whilst this is non-essential, it is a typical step implemented by a PHY layer of the base station processing. The skilled person will understand that the FEC function may be implemented in either the BBU 20 or first RRH 30a in the embodiments above. If implemented in the BBU (which would make the above embodiments a PHY-PHY split as the BBU then implements a PHY function), then the TBs are converted into codewords before transmission to the first RRH 30a with the DCI message. Alternatively, if implemented in the first RRH 30a (which would make the above embodiments a MAC-PHY split), then the BBU transmits TBs to the first RRH 30a with the DCI messages, and the first RRH 30a converts these into codewords. The choice of MCS is unaffected by any of the FEC processing as there is a direct correlation between the size of the TB and the size of the codeword.

Furthermore, the skilled person will understand that any data packet being sent in the uplink (i.e. from the UE 40 to the Core Network 60) may be PHY processed by the first RRH 30a to convert the received analogue signal into codewords. The first RRH 30a may then implement a reverse FEC function to convert these codewords into TBs, or the first RRH 30a may transmit the stream of codewords to the BBU 20 for reverse FEC processing.

In a further embodiment, the present invention may be implemented in a virtualised manner. This may be achieved by the hardware platform being controlled by a hypervisor element responsible for the allocation of hardware resources to a set of virtualised machines. Each virtual machine hosts a guest operating system, in which a virtualised application may be run. Accordingly, several virtualised BBUs may be implemented in a single entity as either one BBU per virtual machine or one BBU per virtualised application in a virtual machine, with the hypervisor allocating resources to each virtual machine or application depending on its requirements. In this manner, the BBU's hardware may be logically split between different virtual machines, with each virtual machine serving a particular operator.

The skilled person will understand that any combination of features is possible within the scope of the invention, as claimed.

## Claims

1. A scheduling module for a cellular communications network, comprising a processor configured to schedule data into a transport unit for a User Equipment, UE; and
a transmitter configured to transmit, to one of a plurality of remote units, the transport unit and a Downlink Control Information, DCI, message, the DCI message indicating the modulation scheme for the data in the transport unit.

2. A scheduling module as claimed in Claim 1, wherein the processor is further configured to operate a plurality of virtualised environments, wherein in each virtualised environment the processor is configured to schedule data for a particular Network Operator.

3. A modulating module for a cellular communications network, comprising a receiver configured to receive a transport unit, including scheduled data for a User Equipment, UE, and a Downlink Control Information, DCI, message, the DCI message indicating the modulation scheme to be used for the data in the transport unit; and
a processor configured to modulate the scheduled data for transmission to the UE according to the modulation scheme indicated in the DCI message.

4. A modulating module as claimed in Claim 3, further comprising a transmitter configured to send the DCI message to the UE.

5. A network node comprising a module of any one of Claims 1 to 4.

6. A cellular communications network comprising a network node of Claim 5.

7. A method of scheduling data in a cellular communications network, the method comprising the steps of:
scheduling data into a transport unit for a User Equipment, UE;
constructing a Downlink Control Information, DCI, message, the DCI message indicating the modulation scheme for the data in the transport unit;
transmitting the transport unit and the DCI message to one of a plurality of remote units.

8. A method as claimed in Claim 7, operating in one of a plurality of virtualised environments.

9. A method of modulating data in a cellular communications network, the method comprising the steps of:
receiving a transport unit including scheduled data for a User Equipment, UE, and a Downlink Control Information, DCI, message, the DCI message indicating the modulation scheme to be used for the data in the transport unit;
modulating the scheduled data for transmission to the UE according to the modulation scheme indicated in the DCI message.

10. A method as claimed in Claim 9, further comprising the step of: transmitting the DCI message to the UE.

11. A computer program containing computer-executable code which, when executed on a computer, causes the computer to perform the steps of the method of any one of Claims 7 to 10.
